(19) **Europäisches Patentamt / European Patent Office / Office européen des brevets**

(11) **EP 4 782 192 A1**

(12) **EUROPEAN PATENT APPLICATION**

(43) Date of publication:
**29.07.2026 Bulletin 2026/31**

(21) Application number: **25305120.5**

(22) Date of filing: **28.01.2025**

(51) International Patent Classification (IPC):
**B29C 73/04** *(2006.01)* **B29C 64/00** *(2017.01)*

(52) Cooperative Patent Classification (CPC):
**B29C 73/04; B29C 64/386; B33Y 10/00; B33Y 50/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Université Bourgogne Europe**
  **21000 Dijon (FR)**
• **Centre National de la Recherche Scientifique**
  **75016 Paris (FR)**
• **Université de Technologie de Belfort-Montbéliard**
  **90010 Belfort Cedex (FR)**

(72) Inventors:
• **ZHANG, Yicha**
  **Moval (FR)**
• **LIAO, Hanlin**
  **Sevenans (FR)**
• **KAMBLE, Pushkar**
  **Belfort (FR)**
• **CHEN, Hao**
  **Belfort (FR)**

(74) Representative: **Office Freylinger**
**P.O. Box 48**
**8001 Strassen (LU)**

(54) **SURFACE TREATMENT PROCESS**

(57) The invention provides a method for treatment of a surface having a least one defect, said defect defining a recess portion for the surface, the method comprising the steps of obtaining height data representing a height profile of the surface, generating a 2-dimensional height mapping (12) of the surface from the acquired height data, processing the 2-dimensional height mapping (12) to generate a sequence of printable 2D images (u1-u6), the printable 2D images representing 3D printable area(s) corresponding to recess portion(s) of the at least one defect, and performing a 3D additive manufacturing process with a 3D printer to repair the surface by feeding the sequence of printable 2D images (u1-u6) as instructions to the 3D printer.

10

S1

S2

S3

S4

Figure 1

## Description

### Technical field

The present invention generally relates to a method for treating a surface using additive manufacturing, specifically to a method for repairing a surface.

### Background Art

Surface treatment processes are essential for ensuring the longevity, aesthetic, and functionality of a wide range of industrial components. These processes are applied both to newly manufactured parts as a post-processing step or to restore existing surfaces that have experienced wear, damage, or degradation. Traditionally, these processes were performed by loosely coating the surface with paint or material to hide defects such as cracks, scratches or holes. However, such processes are expensive due to inefficient use of paint/material and may thus not be usable if the surface to repair is too large.

In recent years, the integration of 3D additive manufacturing (AM) technologies into surface treatment workflows has shown great potential, enabling material deposition to correct surface irregularities and enhance surface properties. However, current methods for leveraging 3D models to represent defect sites present significant challenges. In conventional practices, a technician must manually create 3D models of the defect or damaged areas, a process that is time-consuming and resource-intensive. These models must accurately reflect the surface imperfections in detail and are subsequently "sliced" to generate layer-by-layer instructions for the additive manufacturing equipment. This manual process introduces delays, adds cost, and can be prone to errors or inconsistencies, particularly when dealing with complex or irregular defect geometries.

Additionally, the creation of 3D models for defect sites is not always scalable for large-scale applications or when rapid surface repairs are required. The process of scanning, modeling, and slicing data disrupts the potential for a streamlined, automated workflow, hindering both the efficiency and responsiveness of surface treatment operations. This challenge is compounded when applied to the repair of existing objects, where surface degradation may vary significantly from part to part, further increasing the complexity of manually generating accurate 3D models.

### Technical problem

It is an object of the present invention to provide a method for treating a surface using additive manufacturing, which overcomes the aforementioned drawbacks and does not require manual 3D modeling of defects.

### General Description of the Invention

This object is achieved by a method for treatment of a surface as claimed in claim 1.

According to the present invention, a method for treatment of a surface having a least one defect, said defect defining a recess portion for the surface, comprises the steps of:

- obtaining height data representing a height profile of the surface,

- generating a 2-dimensional height mapping of the surface from the acquired height data,

- processing the 2-dimensional height mapping to generate a sequence of printable 2D images, the printable 2D images representing 3D printable area(s) corresponding to recess portion(s) of the at least one defect,

- and performing a 3D additive manufacturing process with a 3D printer to repair the surface by feeding the sequence of printable 2D images as instructions to the 3D printer.

The inventive method thus enables to flatten, smoothen, or level a surface, by injecting material in the recess portions of defects. Defects may here include recesses such as cracks, blind holes, scratches and more generally regions of the surface which extend inwardly. The height profile of the surface may be determined by means of profilometry, imaging, time-of-flight sensors or any other conventional means.

The inventive method may be performed by existing 3D additive manufacturing devices, preferably by a digital light processing, material jetting, or binder jetting 3D printer. Such material jetting 3D printers create objects in a similar method to a two-dimensional ink jet printer. Material may be jetted onto a build surface (here the surface to treat) using either a continuous or Drop on Demand approach. Material is jetted onto the build surface, where it solidifies, and the object is built layer by layer.

Advantageously, the inventive method does not require to loosely coat the surface with paint or material to cover defects, and instead aim to precisely fill defects locally, thus drastically reducing material cost and preserving the original look and feel of the surface. Moreover, when compared to existing 3D manufacturing processes for treatment of a surface, the inventive method does not require to create 3D models of defect sites, resulting in a more streamlined workflow which reduces cost and saves time.

The inventive method may be applied to newly manufactured parts as a post-processing step or to restore existing surfaces that have experienced wear, damage, or degradation. For example, the inventive method may be applied to restore scratched paint on the body of a car, on a body part.

In embodiments, each pixel of each printable image is associated to a region of a domain of the height mapping, and the step of processing the height mapping to generate a sequence of printable images is performed by comparing for each pixel of each printable image an output of the height mapping in the region of the height mapping associated to said pixel with a predetermined height threshold, and setting a value for said pixel based on the result of the comparison.

In other words, a printable image is generated by comparing the height mapping to a predetermined height threshold, and associating values to corresponding pixels of the printable image based on the result of the comparison. Hence, each image represents a 3D printable area corresponding to a section of the recess portion at a given height (the predetermined height threshold). By repeating this step for each printable image at different height thresholds, the inventive method generates an accurate representation of the recess(es), which may then be used by a 3D printer to "fill" the defect sites without injecting unnecessary material, thereby reducing cost and preserving the original feel of the surface.

Preferably, a pixel of a printable image is set to a default value if the output of the height mapping in the region of the height mapping associated to said pixel is greater than the predetermined height threshold. Hence, regions of the height mapping (and thus the surface to treat) having a greater height than the predetermined height threshold are automatically excluded from the printable area.

Preferably, a pixel of a printable image is set to an injection value if the output of the height mapping in the region of the height mapping associated to said pixel is smaller than the predetermined height threshold. Hence, regions of the height mapping (and thus the surface to treat) having a smaller height than the predetermined height threshold are automatically included from the printable area. The injection value may be sampled from an image representing a desired pattern or a desired texture for the surface. This may be useful to e.g. restore a surface with an aesthetic pattern.

In embodiments, recess portions having a minimum height greater than a feature size threshold are excluded from the sequence of printable 2D images.

In embodiments, the height threshold is equal to $z_{min} + n * t$, where n is the printable image number in the sequence of printable images, t is the layer thickness, and $z_{min}$ is the height at the deepest point of the surface.

In embodiments, the number of printable images in the sequence of printable images is equal to

$$n_{max} = \lceil d_{max}/t \rceil$$

where t is the layer thickness, and $d_{max}$ is the maximum defect depth.

In embodiments, during the step of generating the 2-dimensional height mapping of the defect and/or of processing to generate the printable 2D images, the defect/recess shape may be assumed as an inverted cone.

The printable 2D images are in an image format, which refers to a predefined standard or structure for encoding, storing, and representing digital images within a file. This format conventionally defines how visual and metadata information is organized, including aspects such as the file's compression method (if applicable), color representation, resolution, and file extension.

In embodiments, the format of the printable 2D images may include jpeg, tiff or png. These image formats can be directly printed using Digital Light Processing (DLP), Material Jetting (MJP) or Binder Jetting (BJT) 3D printers. By contrasts, conventional 3D printer processes such as FDM, DMLS, SLS use G-code files and not images.

In embodiments, the manufacturing additive process comprises digital light processing, material jetting and/or binder jetting.

In embodiments, the 3D printer parses through each pixel of each image to determine whether to inject material at the corresponding location on the surface to repair.

In embodiments, the 3D printer iterates through the sequence of printable images in increasing order.

In embodiments, the 2-dimensional height mapping is an image, a function, or a look-up table. In embodiments, height data is acquired using profilometry or photography.

In embodiments, the step of processing the 2-dimensional height mapping to generate a sequence of printable 2D images, does not include the generation of a 3-dimensional model.

**Brief Description of the Drawings**

A preferred embodiment of the invention will now be described, by way of example, with reference to the accompanying drawings in which:

    Fig. 1 is a flowchart of an embodiment of the method according to the invention;

    Fig. 2a is a graphical representation of a 1D mapping of defects for a surface to be treated;

    Fig. 2b is a graphical representation of generated printed images based on the mapping of fig. 2a.

    Fig. 3a is a graphical representation of a 2D mapping of defects for a surface to be treated;

    Fig. 3b is a representation of 2D printable images generated from the 2D mapping of defects of Fig. 3a using the present method.

    Fig. 4a-c represents outputs at different steps for an exemplary embodiment of the inventive method.

**Description of Preferred Embodiments**

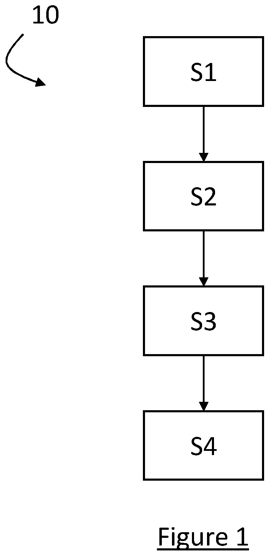

Fig. 1 shows a flowchart of an embodiment of the present method 10 for treatment of a surface of an object. The present method is particularly applicable for the flattening of a surface to repair by means of additive manufacturing. More precisely, the inventive method aims to generate printable instructions for a digital light processing, material jetting, or binder jetting 3D printer in the form of 2D images. As will be explained below, these instructions can be used to fill defect sites 13 such as blind holes, recesses, scratches and cracks with great precision, thereby flattening the surface to repair.

In an initial step S1, height data representing the height profile of the surface is acquired by e.g. profilometry or photography. This height data is subsequently or simultaneously stored in a 2-dimensional height mapping 12 against the XY coordinates of a plane in step S2. This plane is preferably oriented such that it is substantially parallel to the surface to treat, i.e. a normal vector of the plane is parallel to a normal vector of the surface to repair at a point which does not coincide with a defect site. When the height profile is measured by profilometry or photography, this plane will typically correspond to the focal plane of the sensor.

For instance, the height mapping 12 may take the form of a mathematical function $F(x, y) = z$, where x and y are the XY coordinates of the plane and z is the height of the surface. Alternatively, the height mapping 12 may take the form of an image, where the coordinate of a pixel is representative of a region of the plane, and its value is representative of the average height of the surface in that region.

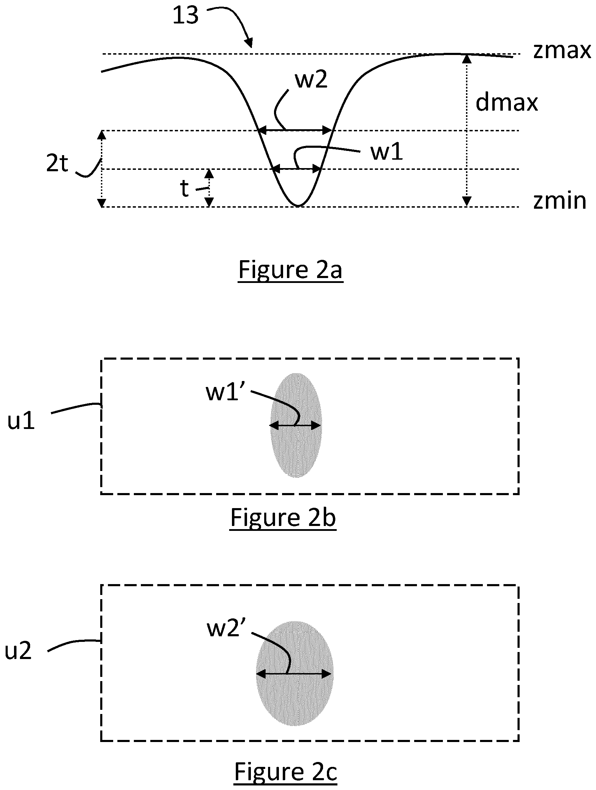

This height mapping 12 is then processed in step S3 to generate a sequence of printable 2D images. Fig. 2a shows a graphical representation of a 1-dimentional height mapping for a surface to be treated. Fig. 2a can be interpreted as a cross section of a 2-dimensional height mapping as defined above, and is only used here below to illustrate the processing of the 2-dimensional height mapping.

A minimum height $z_{min}$ is identified using conventional means. This minimum height $z_{min}$ corresponds to the height at the deepest point of the surface. A maximum defect depth $d_{max}$ may thus be determined from $z_{min}$. A maximum height $z_{max}$ is selected such that its average surface roughness is equal to zero. Hence $z_{max}$ represents the datum of the flat surface, at which the ideal surface roughness would be equal zero. A layer thickness t of a layer is also determined. This layer thickness t may be selected based on the maximum layer thickness of the 3D printer.

A sequence of 2D printable images $u_n$ is subsequently generated by processing the height mapping. The number of 2D printable images to generate $n_{max}$ will typically be such that $n_{max} = \lceil d_{max}/t \rceil$. The printable images are generated iteratively by comparing for each pixel the output of the height mapping with a threshold based on $z_{min}$ and t. Specifically, each pixel of the printable image is associated to a corresponding region of the domain of the height mapping. If the height mapping is a 2D image, a set of pixel of the printable image may be associated to a corresponding set of pixel of the height mapping. If the height mapping is a function $F(x, y) = z$, each pixel of the printable image may be associated to a region $(x,y) \in (x1,x2) \times (y1, y2)$ based on its coordinate. If the "height" of a pixel, i.e. the mean output of the height mapping in the associated region, is greater than $z_{min} + n * t_{max}$ where n is the printable image number in the sequence of printable images, the pixel is set to a default value. Alternatively, if the height of the pixel is smaller than $z_{min} + n * t_{max}$, the pixel is set to an injection value.

Fig. 2b and 2c show graphical representation of generated printed images u1, u2. More specifically, fig. 2b represents the printable image for the first layer u1, i.e. n=1, and fig. 2c represents the printable image for the second layer u2, i.e. n=2. For the generation of the printable image for the first layer u1, the output of the height mapping is compared to $z_{min} + t$. If the output of the height mapping is smaller than $z_{min} + t$, the value is set to the default value (here shown in white). Conversely, if the output of the height mapping is greater than $z_{min} + t$, the value is set to the injection value (here shown in gray). As it can be seen, the width of the defect in the printable image for the first layer w1' is substantially equal to the width of the defect in the height data mapping w1 at depth $z_{min} + t$.

For the generation of the printable image for the second layer u2, the output of the height mapping is compared to $z_{min} + 2 * t$. If the output of the height mapping is smaller than $z_{min} + 2 * t$, the value is set to the default value. Conversely, if the output of the height mapping is greater than $z_{min} + 2 * t$, the value is set to the injection value. As it can be seen, the width of the defect in the printable image for the second layer w2' is substantially equal to the width of the defect in the height data mapping w2 at depth $z_{min} + 2 * t$. This process continues iteratively until the printable images for all layers are generated.

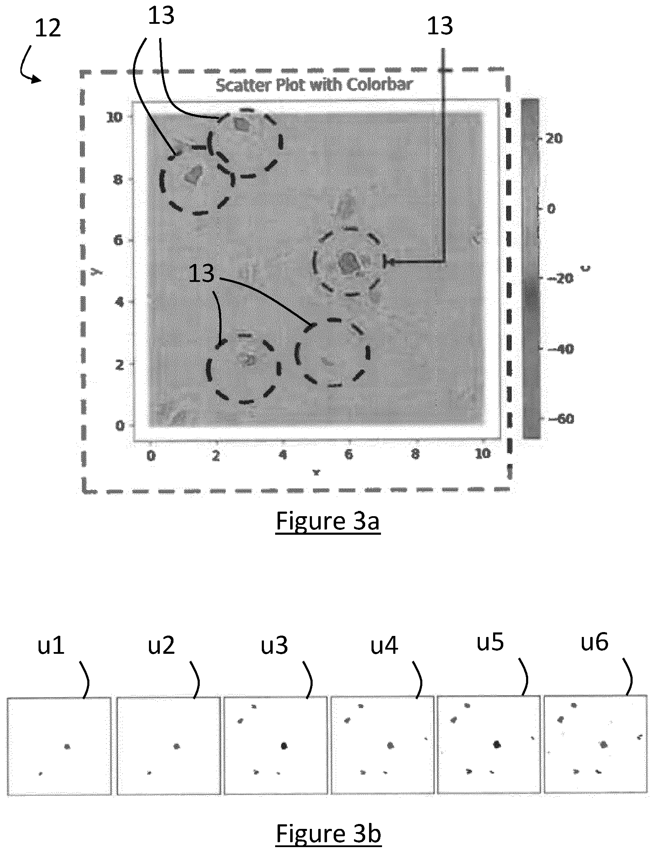

Fig. 3a shows a graphical representation of a 2D mapping of defects for a surface to be treated. The height mapping 12 is here a heatmap representative of the height profile of a surface having a plurality of defects 13. Fig. 3b shows the generated printable images output by processing the height profile data of the heatmap of fig. 3a. Specifically, fig. 3b shows the generated printable images for the first u1, second u2, third u3, fourth u4, fifth u5 and sixth u6 layer.

Once all the printable images generated, these are fed as input to e.g. a material jetting 3D printer in step S4. Internally, the 3D printer parses through each pixel of each image to determine whether to inject material at the corresponding location on the surface to repair. Specifically, for a given layer, the 3D printer is configured to inject material at a location of the surface if and only if the corresponding pixel of the corresponding image has a value equal to the injection value. The 3D printed iterates through the images of the sequence of printable images in increasing order, i.e. u1, u2, u3... $U_{n\_max}$.

The method according to the invention may also be used for repair of a 3D texture or restoration of a pattern, by e.g. sampling the injection value from an image representing a desired pattern or a desired texture for the surface. The sequence of printable 2D images would then represent missing volumes of the 3D texture or pattern. Recesses having a size lower that a feature size of the texture/pattern may be excluded from the sequence of printable images by e.g. setting corresponding pixels in the sequence of 2D printable images to the default value. Hence, only recesses having a minimum height lower than a feature size threshold are considered defects and represented in the sequence of printable 2D images, and recess portions having a minimum height greater than a feature size threshold are excluded from the sequence of printable 2D images

### <Example>

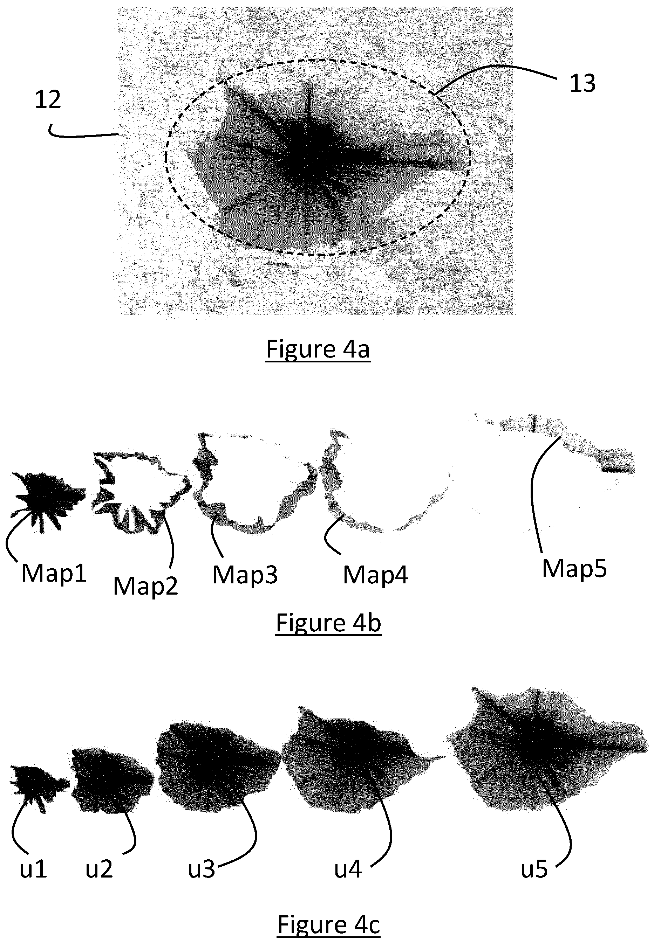

In the following an exemplary, non-limitative embodiment of the invention is discussed in relation to figures 4a-4c. In this embodiment, the 2-dimensional height mapping generated from the acquired height data takes the form of a grayscale image, as will be explained below.

First, an image of the defect (referred here as recess) is obtained. As shown on figure 4a, the image is nothing but a pixel representation of the defect. Each point on the image represents one pixel. A screen is typically made of pixels, which are comprised on Red (R), Green (G), Blue (B) color channels. For the purpose of the invention, the image is converted to grayscale, i.e. the colors channel information is represented only by the brightness of that pixel, also called pixel intensity. Each pixel is assigned a value ranging from 0 to 255 of intensity. Conventionally, a value 0 means the pixel is black, a value of 255 means the pixel is white, and the values in between represent intensity level between 0 - 255 represent grey.

The image of the defect is subsequently sliced. Slicing/Thresholding is the process whereby pixels are segregated based on their intensity values. The threshold for the pixel values (0-255) are predetermined by trial-and error based on the layer thickness possible in the 3D printer. The sliced images are shown on figure 4b.

As it can be seen, the intensity of the pixels is varying from one to the other. Map 1 is the darkest with pixel intensity of 0 and in each map the pixel intensity increases, for example, Map 1 = 0, Map 2 = 50, Map 3 = 90, Map 4 = 140, Map 5 = 160. The darkest spot with zero intensity represents the area that is furthest from the surface, i.e. the deepest point of the map. Then in each successive map, the intensity of the pixel is observed to be increasing, which means the depth of those points is reducing, i.e. their distance from the average surface level is reducing as the brightness increases.

In this example, Map1 with intensity 0 corresponds to an average defect depth of 50 micron. Map2 with intensity 50 corresponds to an average defect depth of 40 micron. Map3 with intensity 90 corresponds to an average defect depth of 32 micron. Map4 with intensity 140 corresponds to an average defect depth of 19 micron. And Map5 with intensity 160 corresponds to an average defect depth of 0 micron.

The correlation between pixel intensity and the defect depth is established by using a profilometer where the maximum and average depth of the defects of the surface are known.

Each threshold map above is used to prepare an image layer for the 3D printing, as shown on figure 4c. Care is taken that the previous pixels are also printed while printing the successive images as the recess has a certain depth.

The layer 1 is associated to image u1, which comprises pixels having 0 intensity. The layer 2 is associated to image u2, which comprises pixels having intensity < x1. The layer 3 is associated to image u4, which comprises pixels having intensity < x2. The layer 4 is associated to image u4, which comprises pixels having intensity < x3. The layer 5 is associated to image u5, which comprises pixels having intensity < x4. Where, x1 < x2 < x3 < x4 and the values of x1, x2, x3 and x4 are dependent on the layer thickness possible in the given 3d printer. For example, if the 3D printer is capable to deposit a layer of thickness 5 micron, the pixel intensity values obtained during thresholding/slicing will be assigned such that it correlates with depth in the multiples of 5 micron.

The images are finally printed in a series using Digital Light Processing (DLP), Material Jetting (MJP) or Binder Jetting (BJT) 3D printers.

### Claims

1. A method for treatment of a surface having a least one defect, said defect defining a recess portion for the surface, the method comprising the steps of:

   • obtaining height data representing a height profile of the surface;
   • generating a 2-dimensional height mapping (12) of the surface from the acquired height data;
   • processing the 2-dimensional height mapping (12) to generate a sequence of printable 2D images (u1-u6), the printable 2D images representing 3D printable area(s) corresponding to recess portion(s) of the at least one defect;
   • performing a 3D additive manufacturing process with a 3D printer to repair the surface by feeding the sequence of printable 2D images (u1-u6) as instructions to the 3D printer.

**2.** Method according to any of the preceding claims, whereby each pixel of each printable image (u1-u6) is associated to a region of a domain of the height mapping (12); and
whereby the step of processing the height mapping (12) to generate a sequence of printable images (u1-u6) is performed by comparing for each pixel of each printable image (u1-u6) an output of the height mapping (12) in the region of the height mapping (12) associated to said pixel with a predetermined height threshold, and setting a value for said pixel based on the result of the comparison.

**3.** Method according to the previous claim, whereby a pixel of a printable image (u1-u6) is set to a default value if the output of the height mapping (12) in the region of the height mapping (12) associated to said pixel is greater than the predetermined height threshold.

**4.** Method according to any of the two preceding claims, whereby a pixel of a printable image (u1-u6) is set to an injection value if the output of the height mapping (12) in the region of the height mapping (12) associated to said pixel is smaller than the predetermined height threshold.

**5.** Method according to the previous claim, whereby the injection value is sampled from an image representing a desired pattern or a desired texture for the surface.

**6.** Method according to any of the preceding claims, whereby recess portions having a minimum height greater than a feature size threshold are excluded from the sequence of printable 2D images (u1-u6).

**7.** Method according to any of the four preceding claims, whereby the height threshold is equal to $z_{min} + n * t$, where $n$ is the printable image number in the sequence of printable images (u1-u6), $t$ is the layer thickness, and $z_{min}$ is the height at the deepest point of the surface.

**8.** Method according to any of the preceding claims, whereby the number of printable images in the sequence of printable images (u1-u6) is equal to $n_{max} = \lceil d_{max}/t \rceil$, where $t$ is the layer thickness, and $d_{max}$ is the maximum defect depth.

**9.** Method according to any of the preceding claims, whereby the manufacturing additive process comprises digital light processing, material jetting and/or binder jetting.

**10.** Method according to any of the preceding claims, whereby the 3D printer parses through each pixel of each printable image (u1-u6) to determine whether to inject material at the corresponding location on the surface to repair.

**11.** Method according to any of the preceding claims, whereby the 3D printer iterates through the sequence of printable images (u1-u6) in increasing order.

**12.** Method according to any of the preceding claims, whereby the 2-dimensional height mapping is an image.

**13.** Method according to any of the preceding claims, whereby the 2-dimensional height mapping is a function or a look-up table.

**14.** Method according to any of the preceding claims, whereby height data is acquired using profilometry or photography.

**15.** Method according to any of the preceding claims, whereby the step of processing the 2-dimensional height mapping (12) to generate a sequence of printable 2D images (u1-u6), does not include the generation of a 3-dimensional model.

10

Figure 1

Figure 2a

Figure 2b

Figure 2c

Figure 3a

Figure 3b

12

13

Figure 4a

Map1 Map2 Map3 Map4 Map5

Figure 4b

u1 u2 u3 u4 u5

Figure 4c

Europäisches
Patentamt
European
Patent Office
Office européen
des brevets

**EUROPEAN SEARCH REPORT**

Application Number

EP 25 30 5120

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/166907 A1 (FREDERICK AMY LOUISE [US]) 28 May 2020 (2020-05-28) <br> * paragraphs [0003], [0034], [0037], [0038], [0042] * <br> * figures 1-3 * | 1-15 | INV. <br> B29C73/04 <br> B29C64/00 |
| X | US 2020/307096 A1 (SIMONIN MATTHEW P [US] ET AL) 1 October 2020 (2020-10-01) <br> * paragraphs [0001], [0027] - [0032], [0038] * <br> * figures 1,2 * | 1-15 | |
| X | US 2019/118497 A1 (KIERBEL DANIEL [FR] ET AL) 25 April 2019 (2019-04-25) <br> * paragraphs [0002], [0007], [0037], [0038] * <br> * figure 2 * | 1-15 | |
| X | US 11 118 573 B2 (VESTAS WIND SYS AS [DK]) 14 September 2021 (2021-09-14) <br> * column 1, line 6 - line 9 * <br> * column 2, line 32 - column 3, line 26 * <br> * column 5, line 50 - column 7, line 13 * <br> * figure 2 * | 1-15 | TECHNICAL FIELDS SEARCHED (IPC) <br><br> B29C |
| X | US 2024/075683 A1 (HABIBPOUR MEHDI [US] ET AL) 7 March 2024 (2024-03-07) <br> * paragraphs [0002], [0007], [0015], [0017], [0018], [0019] * <br> * figures 1,2 * | 1-15 | |

The present search report has been drawn up for all claims

| Place of search | Date of completion of the search | Examiner |
|---|---|---|
| The Hague | 8 July 2025 | Ullrich, Klaus |

EPO FORM 1503 03.82 (P04C01)

## ANNEX TO THE EUROPEAN SEARCH REPORT
## ON EUROPEAN PATENT APPLICATION NO.

EP 25 30 5120

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2025

| Patent document cited in search report | | | Publication date | Patent family member(s) | | | Publication date |
|---|---|---|---|---|---|---|---|
| US 2020166907 | A1 | | 28-05-2020 | US | 2020166907 | A1 | 28-05-2020 |
| | | | | WO | 2019036347 | A1 | 21-02-2019 |
| US 2020307096 | A1 | | 01-10-2020 | CN | 111730284 | A | 02-10-2020 |
| | | | | DE | 102020103127 | A1 | 01-10-2020 |
| | | | | US | 2020307096 | A1 | 01-10-2020 |
| US 2019118497 | A1 | | 25-04-2019 | CN | 109693809 | A | 30-04-2019 |
| | | | | EP | 3473417 | A1 | 24-04-2019 |
| | | | | FR | 3072602 | A1 | 26-04-2019 |
| | | | | US | 2019118497 | A1 | 25-04-2019 |
| US 11118573 | B2 | | 14-09-2021 | CN | 110192026 | A | 30-08-2019 |
| | | | | EP | 3559443 | A1 | 30-10-2019 |
| | | | | ES | 2947298 | T3 | 04-08-2023 |
| | | | | US | 2019338759 | A1 | 07-11-2019 |
| | | | | WO | 2018113875 | A1 | 28-06-2018 |
| US 2024075683 | A1 | | 07-03-2024 | US | 2024075683 | A1 | 07-03-2024 |
| | | | | WO | 2024049786 | A1 | 07-03-2024 |

EPO FORM P0459

For more details about this annex : see Official Journal of the European Patent Office, No. 12/82